## Europäisches Patentamt

## European Patent Office

## Office européen des brevets

(19)

(11) Veröffentlichungsnummer: **0 008 708**
**B1**

(12) **EUROPÄISCHE PATENTSCHRIFT**

(45) Veröffentlichungstag der Patentschrift: **16.06.82**

(21) Anmeldenummer: **79102944.0**

(22) Anmeldetag: **13.08.79**

(51) Int. Cl.³: **H 02 P 13/22,**
**H 02 M 3/335, G 05 F 1/64**

(54) Anordnung mit parallel geschalteten Gleichstrom-Umrichtern.

(30) Priorität: **31.08.78 DE 2838062**

(43) Veröffentlichungstag der Anmeldung:
**19.03.80 Patentblatt 80/6**

(45) Bekanntmachung des Hinweises auf die Patenterteilung:
**16.06.82 Patentblatt 82/24**

(84) Benannte Vertragsstaaten:
**AT BE CH FR GB IT NL SE**

(56) Entgegenhaltungen:
**DE - A1 - 2 639 944**
**DE - B2 - 2 429 578**
**US - A - 3 705 311**
**US - A - 3 824 450**
**US - A - 3 890 559**
**US - A - 4 058 758**
**IEEE TRANSACTIONS ON MAGNETICS Band**
**MAG-14, Nr. 5, September 1978 H. MÁTSUO et**
**al.**
**"New energy-storage dc-dc converter with**
**multiple outputs" Seite 1005 bis 1007**
**Techische Mitteilangen, AEG-Telefunken '71**
**Heft 2, Seiten 98—99**

(73) Patentinhaber: **SIEMENS AKTIENGESELLSCHAFT**
**Berlin und München**
**Postfach 22 02 61**
**D-8000 München 22 (DE)**

(72) Erfinder: **Müller, Adolf**
**Karwendelstrasse 1**
**D-8021 Neuried (DE)**
Erfinder: **Stolz, Gerhard**
**Sudetenstrasse 13**
**D-8034 Germering (DE)**

Courier Press, Leamington Spa, England.

## Anordnung mit parallel geschalteten Gleichstrom-Umrichtern

Die Erfindung bezieht sich auf eine Anordnung mit wenigstens zwei wenigstens ausgangsseitig parallelgeschalteten Gleichstrom-Umrichtern, die jeweils einen die Primärwicklung eines Übertragers einschließenden eingangsseitigen Wechselstrom-Zwischenkreis, einen ersten eine Sekundärwicklung des Übertragers einschließenden ausgangsseitigen Wechselstrom-Zwischenkreis, zwei einem gemeinsamen Stellglied zugeordnete Spannungsregler und eine vom Reglerausgangssignal entsprechend der Regelabweichung angesteuerte Steuereinrichtung für den eingangsseitigen Wechselstrom-Zwischenkreis enthalten, wobei ein erster der beiden Regler an den Ausgang des ersten ausgangsseitigen Wechselstrom-Zwischenkreises angeschlossen ist.

Eine derartige Anordnung ist beispielsweise aus der US—A—3 890 559 bekannt. Bei der bekannten Anordnung weist jeder Gleichstrom-Umrichter einen Zweitregler auf, der verhindert, daß im Falle einer nicht auf den betreffenden Umrichter zurückzuführenden höheren Ausgangsspannung gegenüber der Ausgangsspannung des Umrichters dieser durch den ersten Regler völlig zugesteuert wird. Der erste Regler besteht aus einem Differenzverstärker mit nachgeschaltetem Verstärkertransistor. Der erste Regler wird von der am gemeinsamen Lastwiderstand anliegenden Spannung gesteuert. Der zweite Regler wird mit der Ausgangsspannung des Umrichters beaufschlagt.

Voraussetzung für die beschriebene Regelungsart ist, daß zwischen jedem Umrichter-Ausgang mit der Parallel-verdrahtung eine Entkopplungsdiode eingefügt ist. Bei größeren Ausgangsströmen verbrauchen diese Entkopplungsdioden eine erhebliche Leistung und bedürfen der Montage auf einer Kühlfläche. Außerdem vermindert sie die Genauigkeit der Ausgangsspannung bei verschiedenen Belastungen. Zwar vermag der Einsatz von Schottky statt Silizium-Dioden zur Entkopplung von Spannungen bis 30 V die Verluste zu mindern, jedoch steigert er die Gerätekosten erheblich.

Gleichstrom-Umrichter sind beispielsweise in dem Buch "Stromversorgung elektronischer Schaltungen und Geräte" von Wagner, R.v. Decker's Verlag G. Schenk, Hamburg, 1964, Seiten 588 bis 604 beschrieben.

Eine Parallelschaltung zweier oder mehrerer Gleichstrom-Umrichter bewirkt eine Steigerung der Betriebssicherheit. Es kann nämlich ein Gleichstrom-Umrichter ohne Störung der gemeinsamen Ausgangsspannung der Anordnung ausfallen, sofern sich die Belastung auf zwei oder mehrere Umrichter verteilen und zwischen diesen auch extrem wechseln kann und die Nennleistung der verbleibenden Funktionsfähigen Gleichstrom-Umrichter nicht kleiner als die anliegende Belastung ist.

Weisen die Übertrager in den Gleichstrom-Umrichtern noch eine oder mehrere zusätzliche Sekundärwicklungen auf, die Teil weiterer ausgangsseitiger Wechselstrom-Zwischenkreise sind, so tritt ein weiteres Problem auf. Ein Halten aller Spannungen bei Entlastung desjenigen Ausgangskreises, dessen Spannung als Regelgröße dient und die Belastung des zweiten oder weiterer über dem gemeinsamen Übertrager verkoppelter ausgangsseitiger Wechselstrom-Zwischenkreise erfordert einen, auf eine Speicherinduktivität im ersten ausgangsseitigen Wechselstrom-Zwischenkreis abgestimmten Vorbelastungswiderstand, um einen "lückenden Betrieb", bei dem in einer Speicher-drossel der Strom zeitweise während jeder Periodendauer zu Null wird und damit eine Tastgradreduzierung eintritt, zu unterbinden. Dieser Widerstand verursacht jedoch eine Verluststeigerung.

Aufgabe der Erfindung ist es, eine Anordnung zur Parallelschaltung von Gleichstrom-Umrichtern anzugeben, die möglichst geringe zusätzliche Verluste aufweist.

Ausgehend von einer Anordnung der einlietend geschilderten Art, wird diese Aufgabe erfindungsgemäß dadurch gelöst, daß die Gleichstrom-Umrichter ausgangsseitig unmittelbar parallelgeschaltet sind und daß in jedem Gleichstrom-Umrichter ein diese Sekundärwicklung des Übertragers einschließender, vom Ausgang der Anordnung entkoppelter und dem ersten ausgangsseitigen Wechselstrom-Zwischenkreis nachgebildeter zweiter ausgangsseitiger Wechselstrom-Zwischenkreis vorgesehen ist und daß der zweite Regler an den belasteten Ausgang des zweiten Wechselstrom-Zwischenkreises angeschlossen ist und daß ferner zwischen den Ausgängen beider Regler und dem Eingang der Steuereinrichtung jeweils eine Entkopplungsdiode vorgesehen ist.

Die Entkoplungsdioden haben nichts mit den bei der Schilderung des Standes der Technik erwähnten zu tun.

Durch die erfindungsgemäßen Maßnahmen ergibt sich in vorteilhafter Weise eine Anordnung, die die gewünschte Parallelschaltung ohne zusätzliche Verluste ermöglicht.

Bei einer Variante der erfindungsgemäßen Anordnung mit Durchfluß-Umrichtern, die in den ausgangsseitigen Wechselstrom-Zwischenkreisen Speicherdrosseln enthalten, ist es vorteilhaft, wenn die Wicklungen der Speicherdrosseln in jedem einzelnen Durchfluß-Umrichter auf einen gemeinsamen Kern gewickelt sind. Die Verwendung eines gemeinsamen Kernes für mehrere Zwischenkreis-Speicherdrosseln eines Gleichstrom-Umrichters an sich ist bereits aus der Druckschrift "Technische Mitteilungen", AEG-Telefunken, 1971, Heft 2, Seiten 98/99, bekannt.

Vorteilhaft ist es weiter, wenn als erster und zweiter Regler Transistorstufen im Emitterschaltung vorgesehen sind, deren Basen über einen Widerstand miteinander verbunden sind.

Vorteilhaft ist es schließlich, wenn am Ausgang des zweiten (nachgebildeten) ausgangsseitigen Wechselstrom-Zwischenkreises eine Spannungsüberwachungsanordnung vorgesehen ist.

Anhand von Ausführungsbeispielen wird die Erfindung nachstehend näher erläutert.

Fig. 1 zeigt ein Blockschaltbild zweier parallel geschalteter Gleichstrom-Umrichter,

Fig. 2 zeigt einen Gleichstrom-Umrichter für eine erfindungsgemäße Anordnung und

Fig. 3 zeigt ein detailliertes Ausführungsbeispiel eines Gleichstrom-Umrichters für eine erfindungsgemäße Anordnung

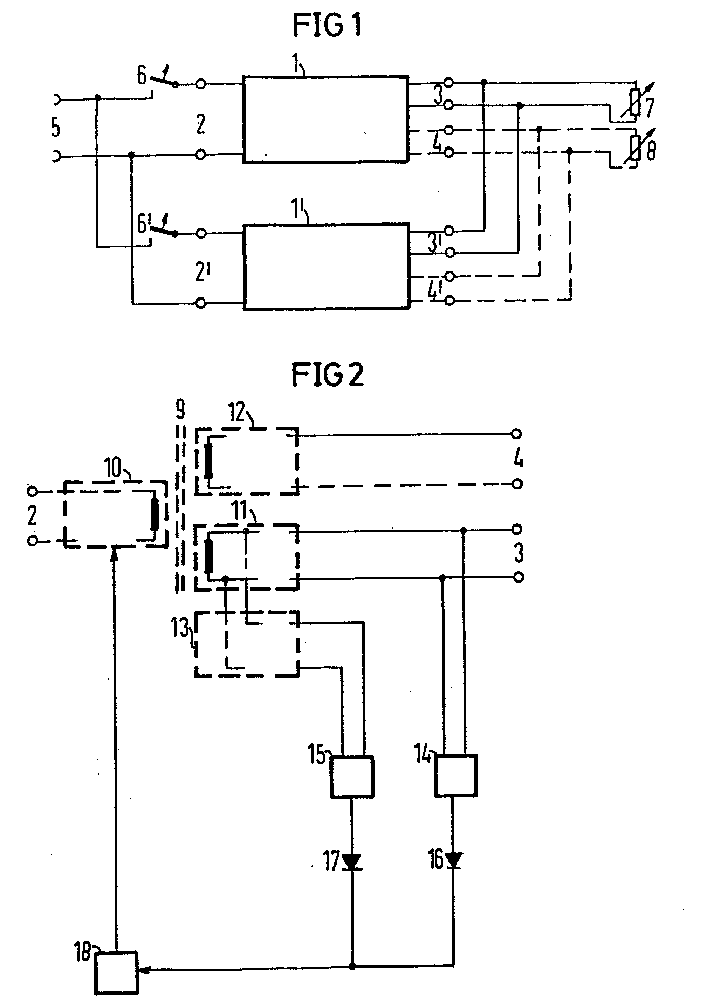

Fig. 1 zeigt ein Blockshaltbild zweier parallel geschalteter Gleichstrom-Umrichter. Diese enthalten einen Eingang 2 bzw. 2', einen ersten Ausgang 3 bzw. 3' und einen zweiten Ausgang 4 bzw. 4'. Die beiden Eingänge 2 und 2' sind an einem Gesamteingang 5 parallel geschaltet. Vor jedem Gleichstrom-Umrichter 1 bzw. 1' ist ein Sicherungsautomat 6 bzw. 6' angeordnet. An den parallel geschalteten ersten Ausgängen 3 bzw. 3' ist eine eventuell variable Last 7 angeschlossen, während die parallel geschalteten zweiten Ausgänge 4 und 4' mit einer eventuellen variablen Last 8 verbunden sind. Die Anordnung soll auch dann eine ausreichende Spannung abgeben, wenn einer der beiden Gleichstrom-Umrichter ausfällt, was durch Unterbrechen eines der Sicherungsautomaten 6 bzw. 6' bewirkt werden kann.

Fig. 2 zeigt ein Blockschaltbild eines Ausführungsbeispieles eines erfindungsgemäßen Gleichstrom-Umrichters. Der Gleichstrom-Umrichter 1' ist in gleicher Weise aufgebaut.

Die Anordnung enthält einen Übertrager 9, einen eingangsseitigen Wechselstrom-Zwischenkreis 10, einen ersten ausgangsseitigen Wechselstrom-Zwischenkreis 11, einen zweiten ausgangsseitigen Wechselstrom-Zwischenkreis 12, einen Regler 14 und eine Steuereinrichtung 18. Diese Elemente enthalten auch herkömmliche Gleichstrom-Umrichter. Neu ist eine Nachbildung 13 des ersten ausgangsseitigen Wechselstrom-Zwischenkreises 11, ein Regler 15, der dem bekannten Regler 14 entspricht und zwei Entkopplungsdioden 16 und 17. Ein Regelsignal (Regelabweichung) wird nur aus dem ersten ausgangsseitigen Wechselstrom-Zwischenkreis 11 oder aus dem nachgebildeten Wechstelstrom-Zwischenkreis 13 gewonnen. Der zweite ausgangsseitige Wechselstrom-Zwischenkreis 12 wird durch die ersteren mitgeregelt.

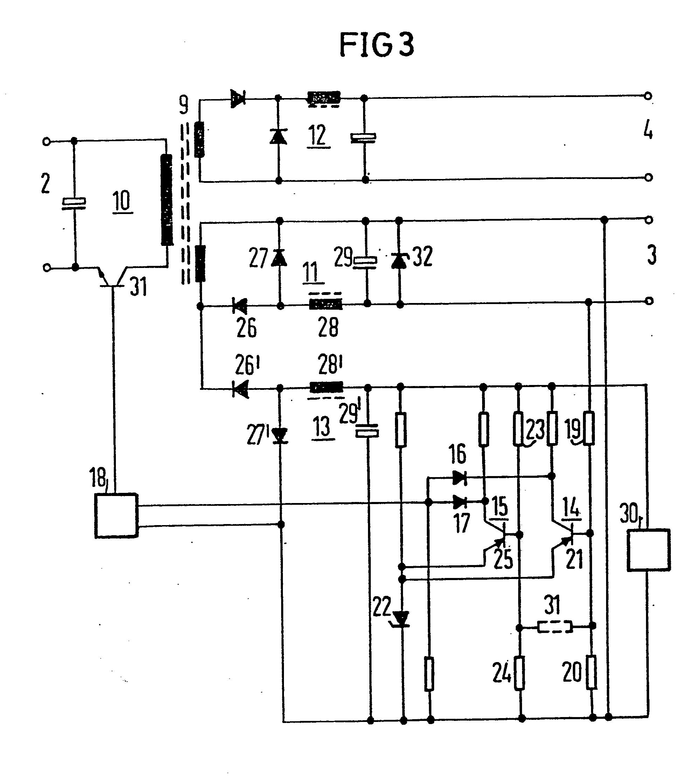

Fig. 3 zeigt detailliert einen Gleichstrom-Umrichter gemäß der Erfindung und zwar einen Durchfluß-Umrichter. Der Regler 14 besteht aus den Widerständen 19 und 20, dem Transistor 21 und der Zenerdiode 22. Der Regler 15 besteht aus den Widerständen 23 und 24, dem Transistor 25 und ebenfalls der Zenerdiode 22.

Der erste ausgangsseitige Wechselstrom-Zwischenkreis 11 besteht aus Dioden 26 und 27, einer Speicherdrossel 28 und einem Kondensator 29. Die Elemente seiner Nachbildung 13 sind mit entsprechenden Bezugszeichen mit einem Apostroph versehen.

Die von der Nachbildung 13 des ersten ausgangsseitigen Wechselstrom-Zwischenkreises 11 erzeugte Hilfsspannung versorgt die Regler 14 und 15 sowie eine vom Ausgang 3 und 4 entkoppelte Spannungsüberwachungsschaltung 30. Diese Schaltungsanordnungen stellen für die Nachbildung 13 eine etwa konstante Last dar.

Die Ausgänge der Regler 14 und 15 wirken über die Dioden 16 und 17 entkoppelt auf die Steuereinrichtung 18, wobei der Regler mit der höheren Emitter-Kollektorspannung dem Tastgrad eines Leistungsschalttransistors 31 bestimmt.

Bei Belastung des ersten ausgangsseitigen Wechselstrom-Zwischenkreises mit dem Ausgang 3 bestimmt der Regler 14 den Tastgrad. Der Spannungsteiler 23, 24 ist so eingestellt. daß der Regler 15 den Tastgrad bei etwas verminderter Spannung und gleicher Belastung am Ausgang 3 bestimmen würde. Wird die Belastung am Ausgang 3 stark vermindert ("lückender Betrieb"), so daß der vom Regler 14 bestimmte Tastgrad zur Spannungshaltung am Ausgang 3 gleich oder kleiner sein müßte als der vom Regler 15 eingestellte Tastgrad, so erfolgt die Ablösung des Reglers 14 durch den Regler 15. In diesem Übergangsbereich kommt es zu Regelschwingungen, die durch das Einfügen des Ausgleichswiderstandes 31 infolge seiner dämpfenden Wirkung beseitigt werden.

Ein ähnlicher Effekt läßt sich erzielen, wenn die Wicklungen der Drossel 28 und 28' auf einen gemeinsamen Kern gewickelt sind, so daß der "lückende Betrieb" in den Kreisen 11 und 13, wenn überhaupt, nur zugleich auftreten kann.

Sollen mehrere sekundäre Wechselstrom-Zwischenkreise (z.B. zu 11 auch 12 und evtl. weitere) auf einem Mindestspannungswert gehalten werden, sind weitere an diese ausgangsseitigen Wechselstrom-Zwischenkreise angeschlossene Regler der genannten Art einzusetzen und in ihrer Wirkung über Dioden (wie 16) parallel zu schalten.

Werden zwei der in Fig. 3 gezeigten Gleichstrom-Umrichter parallel geschaltet, wie es Fig. 1 zeigt, so ergeben sich folgende Betriebsfälle.

Steigt die Ausgangsspannung durch die Einwirkung eines parallel geschalteten Gerätes, dann versucht der Regler 14 den Tastgrad auf das Minimum zu vermindern, da trotz Einwirkung die Ausgangsspannung am Ausgang 3 nicht sinkt. Die vom Ausgang entkoppelte Spannungsüberwachungsschaltung 30 würde ohne Regler 15 den Fehler "Unterspannung" melden. In diesem Fall läßt der Regler 15 den Tastgrad nur wenig absinken und hält den Umrichter betriebsbereit, obwohl die Stromlieferung stark zurückgeht. Die Spannungsüberwachungsschaltung 30 gibt keine Meldung ab.

Fällt einer der parallel geschalteten Umrichter aus, so ergibt sich der Fehler "Unterspannung". Zwar sinkt die Spannung am Ausgang 3 nicht ab, jedoch meldet die Überwachungsschaltung den Fehler, da die Hilfsspannung am Ausgang der Nachbildung 13 ebenfalls ausfällt.

Wird der erste sekundäre Wechselstrom-Zwischenkreis 11 im Einzel- oder Parallelbetrieb entlastet, der sekundäre Wechselstrom-Zwischenkreis 12 mit der nur mitgeregelten Spannung am Ausgang 4 aber belastet, dann würde ohne den Regler 15 die Spannung am Ausgang 4 stark absinken, da der erste sekundäre Wechselstrom-Zwischenkreis 11 in lückenden Betrieb überginge, wobei ein stark verminderter Tastgrad genügen würde, die Ausgangsspannung konstant zu halten. Der Regler 15 hält jedoch den Tastgrad, so daß die Spannung am Ausgang 4 nur wenig absinkt. Die Ausgangsspannung am Ausgang 3 wird durch die Zenerdiode 32 begrenzt, die bei richtiger Bemessung der Drossel 28 nur einen kleinen Strom führt.

## Patentansprüche

1. Anordnung mit wenigstens zwei wenigstens ausgangsseitig parallelgeschalteten Gleichstrom-Umrichtern, (1, 1'), die jeweils einen die Primärwicklung eines Übertragers einschließenden eingangsseitigen Wechselstrom-Zwischenkreis, einen ersten eine Sekundärwicklung des Übertragers einschließenden ausgangsseitigen Wechselstrom-Zwischenkreis, zwei einem gemeinsamen Stellglied zugeordnete Spannungsregler (14, 15) und eine vom Reglerausgangssignal entsprechend der Regelabweichung angesteuerte Steuereinrichtung (18) für den eingangsseitigen Wechselstrom-Zwischenkreis enthalten, wobei ein erster der beiden Regler (14) an den Ausgang des ersten ausgangsseitigen Wechselstrom-Zwischenkreises (11) angeschlossen ist, dadurch gekennzeichnet, daß die Gleichstrom-Umrichter ausgangsseitig unmittelbar parallelgeschaltet sind und daß in jedem Gleichstrom-Umrichter (1, 1') ein diese Sekundärwicklung des Übertragers (9) einschließender, vom Ausgang (3) der Anordnung entkoppelter und dem ersten ausgangsseitigen Wechselstrom-Zwischenkreis (11) nachgebildeter zweiter ausgangsseitiger Wechselstrom-Zwischenkreis (13) vorgesehen ist und daß der zweite Regler (15) an den belasteten Ausgang des zweiten Wechselstrom-Zwischenkreises (13) angeschlossen ist und daß ferner zwischen den Ausgängen beider Regler (14, 15) und dem Eingang der Steuereinrichtung (18) jeweils eine Entkopplungsdiode (16, 17) vorgesehen ist.

2. Anordnung nach Anspruch 1, dadurch gekennzeichnet, daß als erster (14) und zweiter (15) Regler Transistorstufen (21, 25) in Emitterschaltung vorgesehen sind, deren Basen über einen Widerstand (31) miteinander verbunden sind.

3. Anordnung nach Anspruch 1 mit Durchfluß-Umrichter, die im ausgangsseitigen Wechselstrom-Zwischenkreis Speicherdrosseln enthalten, dadurch gekennzeichnet, daß die Wicklungen der Speicherdrosseln (28, 28') in jedem einzelnen Gleichstrom-Umrichter (1, 1') auf einen gemeinsamen Kern gewickelt sind.

4. Anordnung nach Anspruch 1, 2 oder 3, dadurch gekennzeichnet, daß am Ausgang des zweiten ausgangsseitigen Wechselstrom-Zwischenkreises (13) eine Spannungsüberwachungsanordnung (30) vorgesehen ist.

## Claims

1. An arrangement having at least two d.c. converters (1, 1') whose outputs are connected in parallel and which each contain a respective a.c. intermediate circuit, a transformer primary winding, at the input end, a first a.c. intermediate circuit incorporating a secondary winding of the transformer, two voltage regulators (14, 15) assigned a common adjusting element, and a control device (18), operated by the regulator output signal in accordance with the control deviation, for the a.c. intermediate circuit at the input end, wherein a first of the two regulators (14) is connected to the output of the first a.c. intermediate circuit (11), characterised in that the outputs of the d.c. converters are directly connected in parallel, and in each d.c. converter (1, 1'), there is arranged a second a.c. intermediate circuit (13) which incorporates a secondary winding of the transformer (9) that is decoupled from the output (3) of the arrangement, which circuit is copied from the first a.c. intermediate circuit (11), the second regulator (15) being connected to the loaded output of the second a.c. intermediate circuit (13), and respective decoupling diodes (16, 17) being arranged between the outputs of the two regulators (14, 15) and the input of the control device (18).

2. An arrangement as claimed in claim 1, characterised in that said first (14) and second (15) regulators have common emitter transistor stages (21, 25) with their base electrodes connected to one another by means of a resistor (31).

3. An arrangement as claimed in claim 1 comprising flow converters which contain storage chokes in the a.c. intermediate circuit at the output end, characterised in that the windings of the storage chokes (28, 28') in each individual d.c. converter (1, 1') are wound on a common core.

4. An arrangement as claimed in claim 1, 2 or 3, characterised in that a voltage monitoring arrangement (30) is arranged at the output of the second a.c. intermediate circuit (13).

## Revendications

1. Dispositif comportant deux convertisseurs à courant continu (1, 1') montés en parallèle au moins du côté sortie et dont chacun comprend un circuit intermédiaire à courant alternatif incluant, du côté entrée, l'enroulement primaire d'un translateur, un premier circuit intermédiaire à courant alternatif incluant du côté sortie un enroulement secondaire du translateur, deux régulateurs de tension (14, 15) associés en commun à un organe de réglage, et un dispositif de commande pour le circuit intermédiaire à courant alternatif situé du côté sortie et commandé par le signal de sortie du régulateur, en fonction de l'écart de réglage, un premier (14) des deux régulateurs étant relié à la sortie du premier circuit intermédiaire à courant alternatif, situé du côté sortie, caractérisé par le fait que les convertisseurs à courant continu sont montés directement en parallèle du côté sortie et que dans chacun des convertisseurs à courant continu (1, 1') est prévu un second circuit intermédiaire (13) à courant alternatif, situé du côté sortie, comportant cet enroulement secondaire du translateur (9) découplé de la sortie (3) du dispositif et reproduisant le premier circuit intermédiaire à courant alternatif (11) situé du côté sortie, et que le second régulateur (15) est relié à la sortie chargée du second circuit intermédiaire à courant alternatif (13), et qu'en outre il est prévu entre chacune des sorties des deux régulateurs (14, 15) et l'entrée du dispositif de commande (18), une diode de découplage (16, 17).

2. Dispositif selon la revendication 1, caractérisé par le fait qu'au titre des premier (14) et second (15) régulateurs sont prévus des étages à transistors (22, 25) en montage à émetteur commun et dont les bases sont reliées entre elles par une résistance (31).

3. Dispositif selon la revendication 1, à convertisseur opérant sans blocage et comportant des bobines de réactances à accumulation d'énergie dans le circuit intermédiaire à courant alternatif situé du côté sortie, caractérisé par le fait que les enroulements des réactances (28, 28') sont montés sur un noyau commun dans chacun des convertisseurs à courant continu.

4. Dispositif selon la revendication 1, 2 ou 3, caractérisé par le fait qu'à la sortie du second circuit intermédiaire à courant alternatif, situé du côté sortie, est prévu un dispositif (30) servant à surveiller la tension.

FIG 1

FIG 2

## FIG 3